# EUROPEAN PATENT APPLICATION

(11) **EP 1 331 719 A2**
(43) Date of publication of application: **30.07.2003**
(21) Application number: 03001589.5
(22) Date of filing: 24.01.2003
(51) Int. Cl.: H02K 15/095

(54) **Manufacturing a segmented electric machine**

(30) Priority: 25.01.2002 US 352116 P; 22.04.2002 US 374675 P; 22.01.2003 US 350671
(71) Applicant: AXIS S.p.A., 50028 Tavarnelle Val di Pesa (Firenze) (IT)
(72) Inventor: Stratico, Gianfranco, 53100 Siena (IT)
(74) Representative: Lotti, Giorgio

(57) **Abstract**

A pallet-based transportation system is provided for the fabrication of stators from multi-part inner subassemblies. The pallet has seating structures for holding an inner subassembly in an upright orientation, and fixtures for referencing the radial positions of poles. A lift mechanism operates though an aperture in the pallet to raise the seated stator subassembly and a suitable work position in a flyer-type wire coil winder. Movable wire guides in the winder have wire drop surfaces for controllably placing wire turns at specific locations in pockets adjoining the poles. Another lift mechanism raises and pushes inner subassemblies through a centering or aligning ring into matching outer casings.

## Description

### Background of the Invention

The present invention relates to improved solutions for processing dynamo-electric machine components (e.g., armatures or stators for electric motors, generators, or alternators).

Dynamo-electric machines include a rotating cylinder called the armature in a stationary part called the stator. The stator is a thick-walled tube (core or yoke) that surrounds the armature, which is also called the rotor. The stator has windings that produce a rotating magnetic field in the space occupied by the rotor. This magnetic field interacts, for example, with current passed through windings in the armature to generate forces that turn the armature. Conversely, when the armature is rotated by an external prime mover, the stator magnetic field induces a voltage in the windings.

The armature and stator windings are wire coils wound on ferromagnetic pieces or cores (poles). These poles, for example, in the case of a stator, extend radially inward from the inner surface of the stator core or yoke. The radially inward extending poles usually have rectangular cross sections that fan or extend out into what are known as pole heads or shoes. Adjacent longitudinal slots formed along the inner surface of the stator core or yoke may define the poles. Alternatively, longitudinal ferromagnetic pieces (pole cores) may be mounted on the inner surface of the stator core or yoke. Conventional joining techniques, such as dovetail joints, may be used to securely mount the pole cores. The dimensional tolerances of the stator and the armature, the pole configurations, and wire coil-winding properties (such as wire size, pitch, number of turns) all contribute or determine the operational characteristics of the dynamo-electric machine.

In stator manufacturing, the stator wire coils are often injected or wound using automated machinery that includes a wire dispenser or needle mounted on a moving arm. The wire dispenser travels back and forth through the stator bore alongside a pole, dispensing wire stretches that are deposited on the pole sides and ends to form a wire coil. However, such winding operations can be difficult, inconvenient or slow because of the limited geometrical access to the pole sides through the confines of a stator bore. The detrimental effect of the limited geometrical access for wire coil winding may be more pronounced for multiple-pole stators.

Wire winding operations through the stator bores may be avoided by assembling stators using subassemblies, one of which has the pole sides extending out from an inner structure. Wire coils may be wound on such a subassembly from outside its bore using flyer-type winders that are conventionally used, for example, to wind armature coils. Becherucci et al. European publication EP 1020975, and Taguchi et al. U.S. patent No. 4,818,911 (both of which are hereby incorporated by reference in their entireties herein) disclose multi-pole stator subassemblies on which the wire coils may be wound by flyer-type winders.

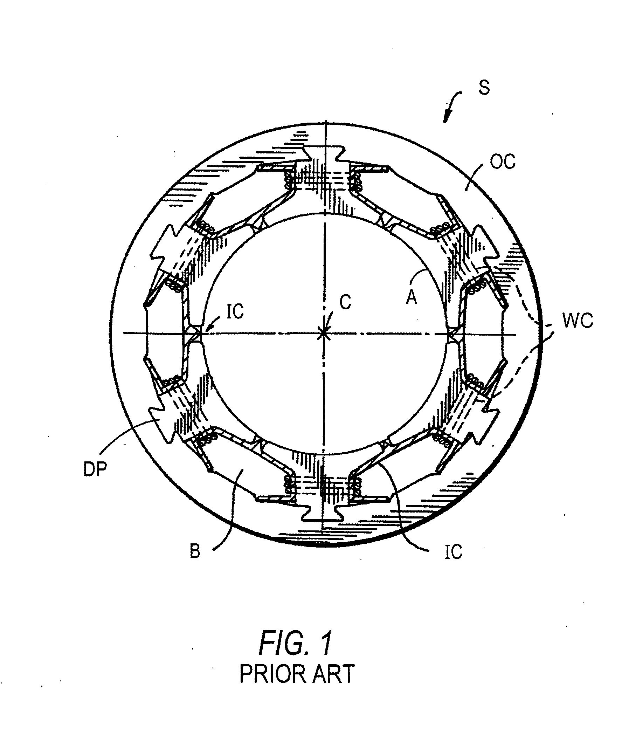

The two references respectively show single and two-section hollow annular inner casings (e.g., casing IC, FIG. 1) made of tubular plastic material with receptacles or seats into which the pole cores (e.g., poles 70) may be installed. The pole cores may be installed in the seats through the hollow interior of the inner casing. Alternatively, the pole pieces may be inserted lengthwise in the seats in separated inner casing tube sections that are later closed over the inserted pole pieces. The inner casings have slots or pockets (e.g., pockets B) alongside the pole seats to accommodate wire coils. After the wire coils (e.g., coils WC) are wound in these pockets, the inner casing may be fitted in an outer casing (e.g., casing OC) to assemble a stator (e.g., stator S). In the assembled stator, the two casings are mechanically held together, for example, by interference fit of pole portions (e.g., dovetail pins DP) in suitable slots that are fashioned in the outer casing.

Consideration is now being given to ways of providing solutions for improving dynamo-electric machine component manufacturing processes. Attention is directed toward methods and apparatus for assembling stators from subassemblies that permit stator wire coils to be wound using flyer-type winders, and in particular from subassemblies of the types similar to those described above.

### Summary of the Invention

In accordance with the principles of the invention, methods and apparatus for the fabrication of dynamoelectric machine components from multiple parts or segments are provided. The inventive methods and apparatus may be used for improving the manufacturing processes used in making or assembling components from multiple part subassemblies.

A pallet-based transportation system is provided for the fabrication of stators from multi-part inner subassemblies on which stator wire coils may be wound using flyer-type winders. The inner subassemblies are made from one or more plastic tube section and several stator pole pieces around which wire coils are wound. These multiple-part inner subassemblies may lack structural strength or rigidity until the final fabrication steps. Outer casings or support rings are fitted on the inner subassemblies to finalize the usable stator structure.

The pallet for carrying multiple-part stator subassembly includes support or seating structures for holding the subassembly in an upright orientation, and fixtures for referencing the radial positions of stator poles in the subassembly. The support structures and the referencing fixtures are designed to hold the stator subassembly through all the fabrication stages involves in making the inner subassembly from plastic tube sections, stator poles, and wire coils.

The seating or support structures and the radial position referencing fixtures are coaxial cylindrical structures that are disposed around an aperture in the pallet. The support structures have an inner ledge surface on which a stator subassembly can be seated in an upright orientation. The referencing fixtures are a circular array of spaced-apart vertical slats, which abut stator pole pieces in the seated in the uprightly seated stator subassemblies. The referencing fixtures may be detachable. The support structures and the radial position referencing fixtures provide structural strength and rigidity to stator subassemblies that lack the same.

A lift mechanism operates though the aperture in the pallet to raise seated stator subassembly to a work position in a flyer-type wire coil winder. The lift mechanism includes an expanding collet whose clamps operate through the spacings in the circular array of the radial position referencing vertical slats to grip and firmly hold the stator subassembly poles. The lift mechanism presents the firmly held poles in proper alignment for wire coil winding by a winding head in the winder.

A specific winding head can be used for winding wire coils in pockets adjoining the presented poles. The specific winding head includes a flyer arm and one or more pairs of movable wire guides. A pair of wire guides is shaped to include sloped wire-running portions extending into wire drop surfaces for controllably placing wire turns at specific locations in pockets. This pair of wire guides may be used for depositing layered and tightly wound wire coils. The other pairs of wire guides are utilized direct or guide wire dispensed by the flyer over geometrical obstructions into the pocket in which the wire coil is being wound.
Another lift mechanism is used in conjunction with the pallet for compression fitting of the stator inner subassembly in the stator outer casing. Another lift mechanism includes a pair of movable press blocks on opposite sides of a centering ring. The centering ring and one of the movable blocks are designed to sandwich and hold the stator outer casing in an upright orientation. The other movable block is designed to operate from below the pallet to lift and push the stator inner subassembly into the sandwiched stator outer casing. The centering ring has tapered bore structure to align and radially compress the inner subassembly as it is pushed into the sandwiched stator outer casing. The tapered bore structure includes channels or grooves to receive dovetail pins or other locking structures on the surface of the inner casing. The channels or grooves are designed to align and direct the received dovetail pins or other locking structures into corresponding dovetail slots in outer casing.

### Brief Description of the Drawings

Further features of the invention, its nature, and various advantages will be more apparent from the following detailed description of the preferred embodiments and the accompanying drawings, wherein like reference characters represent like elements throughout, and in which:
FIG. 1 is a simplified axial end view of a completed stator described in Becherucci et al. European publication EP 1020975. (For purposes of illustration, Becherucci et al. FIG. 1 with renumbered elements is reproduced herein as FIG. 1).
FIG. 2 is a plan view of a pallet base with a support structure and a radial referencing fixture for transporting stator subassemblies in accordance with the principles of the present invention. The bottom tube section of a two-section inner casing is shown seated on the support structure.
FIG. 3 is a cross sectional view of the pallet base and the inner casing bottom section shown in FIG. 2.
FIG. 4a is a view similar to that in FIG. 2, additionally illustrating pole pieces installed in seats in the inner casing bottom section in accordance with the present invention. The inset in FIG. 4a is an enlarged view of a pole piece illustrating, for example, dovetail pin and pole shoe shapes. An arrow directed from the inset figuratively indicates the installation of the pole piece in a seat.
FIG. 4b is a cross sectional view of the structures shown in FIG. 4a.
FIGS. 5a and 5b are views similar to those in FIGS. 4a and 4b, illustrating additionally the placement of the top tube section of the two-section inner casing to complete the fabrication of a stator inner subassembly on which wire coils may be wound using a flyer-type winder in accordance with the present invention.
FIG. 6 is a partial plan view of the structures shown in FIG. 5b with the stator inner subassembly sectioned in plane 2 (FIG. 5b) to reveal details of the referencing fixture and a collet-like structure that is used to grip the subassembly in accordance with the present invention.
FIG. 7 is sectional view of a lift mechanism that is used to raise the stator inner subassembly of FIGS. 4a-5b to a work position in a flyer-type winding machine in accordance with the principles the present invention. The subassembly is shown at its raised position. FIG. 7 also includes a side elevation view of the flyer-type winding machine.
FIGS. 8a and 8b are enlarged sectional views of the top portions of the lift mechanism of FIG. 7 prior to and after its engagement with the stator inner subassembly of FIG. 5b in accordance with the principles of the present invention, respectively.
FIG. 9 is an enlarged sectional view of the bottom portions of the lift mechanism of FIG. 7 in accordance with the principles of the present invention.
FIG. 10 is an enlarged sectional'view of the top portions of the lift mechanism of FIG. 7 illustrating details of the disposition of the stator inner subassembly in its raised position relative to a flyer arm of the winding machine in accordance with the principles the present invention. The flyer arm is shown partially in cross section.
FIG. 11 is a view similar to that of FIG. 10 of another flyer arm and wire guide system for depositing wire coils in the casing pockets that encircle the pole pieces in accordance with the principles the present invention.
FIG. 12 is an enlarged view of area 2 of FIG. 11, illustrating the formation of a layered wire coil in accordance with the present invention.
FIG. 13 is a plan section view as seen from directions 3-3 of FIG. 11 illustrating an initial stage of the layered wire coil winding process.
FIG. 14 is a perspective view illustrating the winding process, as seen from direction 4 of FIG. 13.
FIG. 15 is a partial sectional view of a tool for compression fitting of the stator inner subassembly of FIG. 5b in an outer casing in accordance with the present invention. The tool includes another lift mechanism for raising the stator inner subassembly, and guide members that direct subassembly pole pins into slots in the outer casing.
FIG. 16 is view similar to that of FIG. 15 illustrating the disposition of the lift mechanism and other tool components at a stage near the completion of the subassembly fitting operation in accordance with the principles the present invention.
FIG. 17 is view similar to that of FIG. 16 illustrating the disposition of the fitted stator assembly on the pallet base with the lift mechanism and the other tool components disengaged in accordance with the principles the present invention.

In several of the accompanying drawings, which show sectional views, hatching or shading of various sectional elements may have been omitted for clarity. It will be understood that this omission of hatching or shading in the drawings is for the purpose of clarity in illustration only.

### Detailed Description of the Invention

The present disclosure provides solutions for uniform and reproducible manufacturing of dynamo-electric machine components. The disclosed solutions relate to the processing of subassemblies that include multiple parts or segments. The disclosed solutions include inventive features to enhance control of the dimensions of fabricated parts. The inventive features may be built into the subassembly structures, their transport systems, and/or the processing tools. The disclosed solutions may find application in manufacturing processes where it is important to maintain the integrity of the geometrical configuration of the multiple parts in a subassembly during the processing steps.

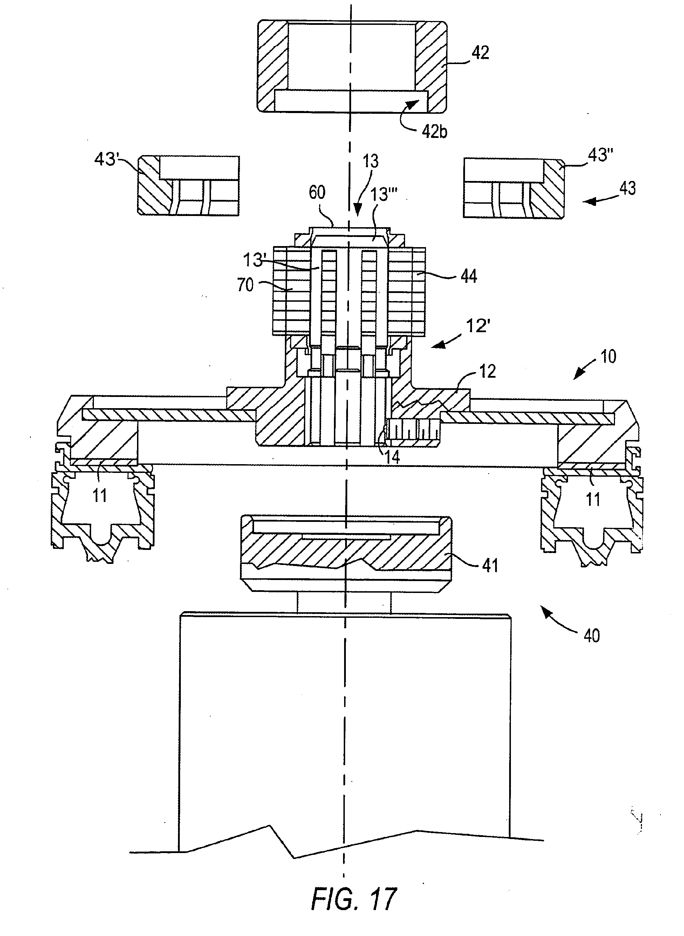

In order that the invention herein described may be easily understood, the subsequent description is set forth in the context of the manufacture of stators using multiple-part stator inner subassemblies or casings (see, e.g., FIGS. 1 and 17). It will, however, be understood that the invention is equally applicable to other types of multiple part subassemblies that may be used in the manufacture of dynamo-electric machine components and also to components of other types of machines. The multiple-part stator inner subassemblies or casings are used herein as illustrative workpieces. An illustrative stator inner subassembly or casing is an annular configuration of multiple stator pole pieces that are installed in longitudinal seats or receptacles that run lengthwise along the sides of a plastic tube. The inner casing subassembly may, for example, be similar to those described in Becherucci et al. European patent application No. 1020975, or Taguchi et al. U.S. patent No. 4,818,911. In particular, the inner casing may include a single plastic tube section or include two or more joinable plastic tube sections.

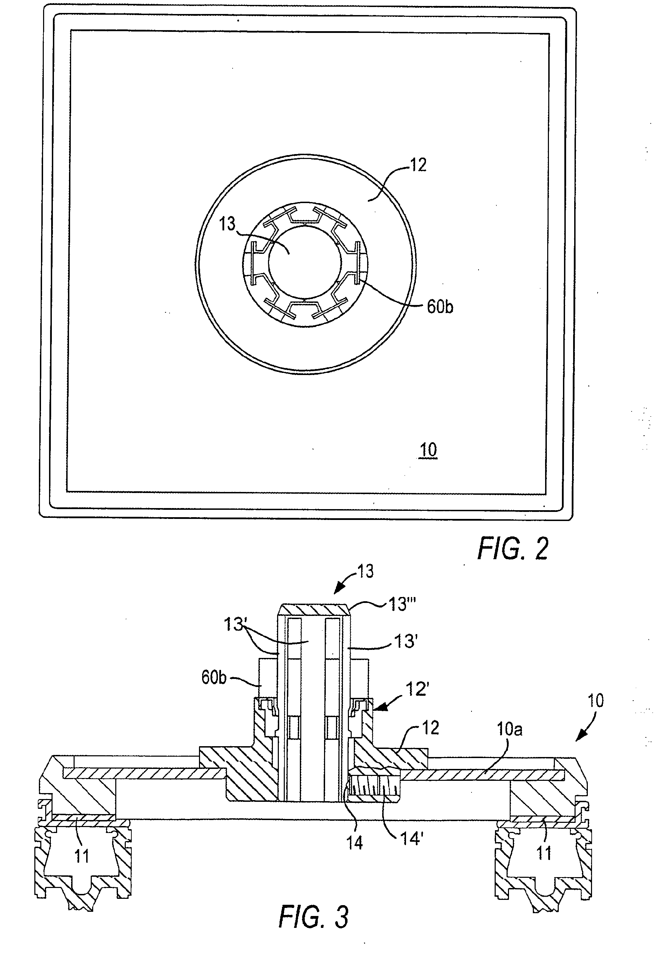

A disclosed manufacturing solution includes transport systems, which preserve the geometrical configuration of multiple parts in a stator subassembly while advancing the stator subassembly from one processing step to the next. The transport systems use a pallet for carrying the multiple-part stator subassembly to work positions in various processing tools. An embodiment of the pallet for carrying the multiple-part stator subassembly is described herein, preliminarily in the context of the fabrication of a multiple pole stator inner subassembly or casing, with reference to FIGS. 2, 3, 4a, 4b, 5a, 5b and 6.

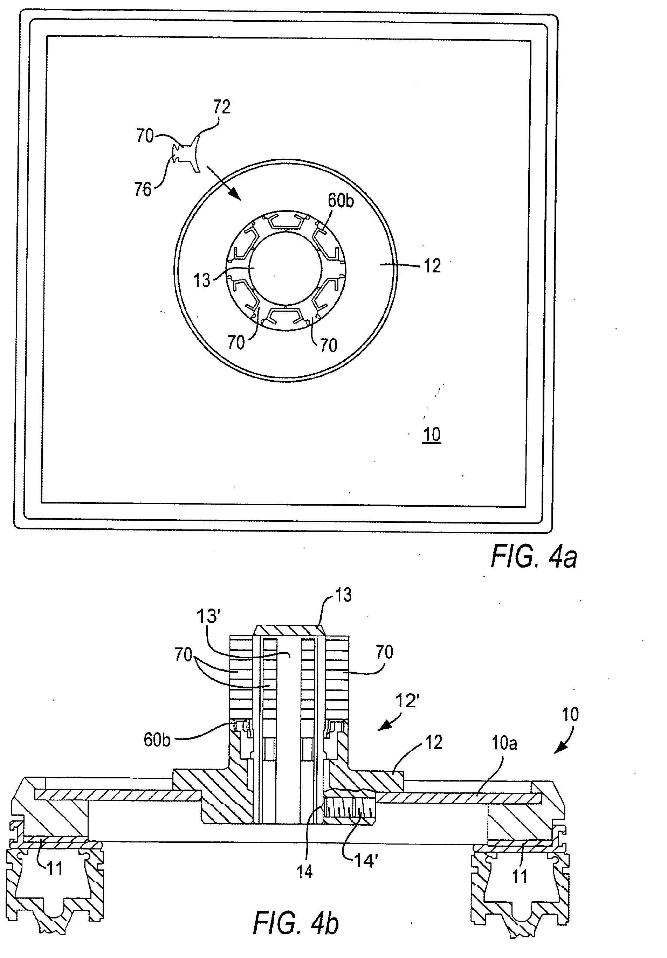

FIGS. 2 and 3 show an exemplary pallet base 10 on which a bottom tube section 60b of a two-section inner casing tube 60 rests. Pallet base 10 may have a rigid plate-like construction, which can be transported on assembly line conveyor belts or rails 11 in a horizontal orientation. Pallet base 10 may be fabricated using, for example, a rigid plate 10a. Subassembly support structure 12 is disposed on plate 10a to physically support stator subassemblies in a suitable upright orientation. Subassembly support structure 12 may, for example, be a hollow cylindrical fixture with a tub-shaped bottom that is seated in a circular cutout in rigid plate 10a. The bore of support structure 12 is open at both ends. The lower bore end is open through an aperture in the tube-shaped bottom. Annular edge or rim portions 12' of support structure 12 are suitably shaped to physically contact and support edge portions of upright stator subassemblies. Edge portions 12' may, for example, be fashioned as an inner ledge in the cylindrical sides of support structure 12. Bottom tube section 60b can rest in an upright or vertical orientation on the inner ledge. Portions of stator pole pieces 70 (FIG. 4a) that may be inserted upright in the seats in bottom tube section 60b also may rest on the inner ledge. For example, portions of pole shoe 72 and/or pole pins 76 of inserted pole piece 70 may rest on the inner ledge.

It will be understood that support structure 12 need not contact all end surfaces of a supported stator subassembly to maintain the latter in a desired upright position. Annular edge portions 12' may be designed to be suitably discontinuous to accommodate various geometric aspects or features of stator subassemblies. For example, support structure 12 sidewalls (and edge portions 12') may be broken as suitably spaced vertical sections or pillars,. The pillar heights and the inter-pillar spacings may be suitably designed to accommodate the bottom portions of wire coils wound around stator poles 70 of an uprightly seated stator inner subassembly.

In addition to edge portions 12' of support structure 12 that are used to reference edge portions of an uprightly seated stator subassembly, pallet 10 includes a removable fixture 13 that serves as a radial position reference for parts of the supported stator subassembly.

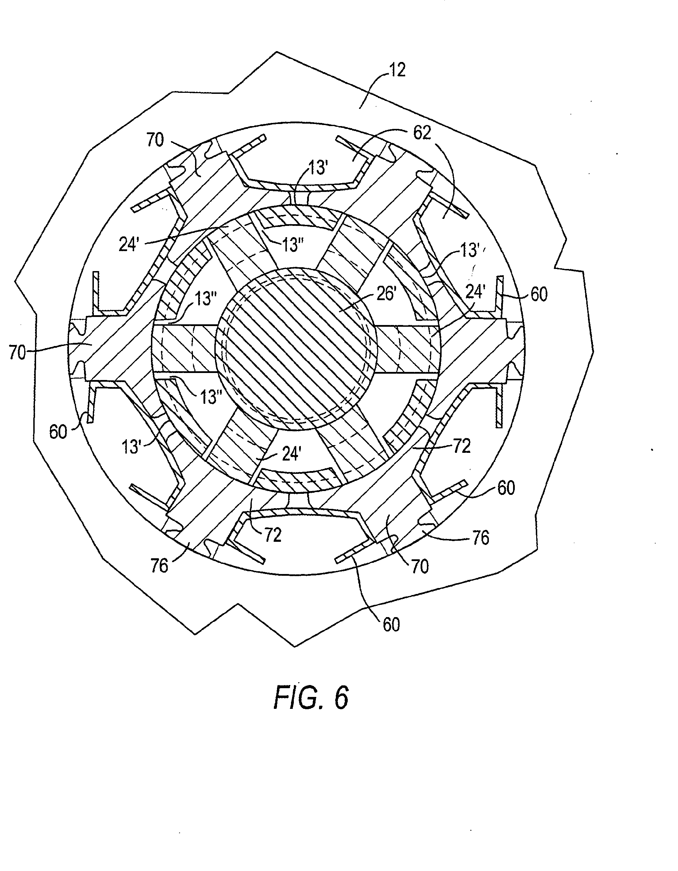

Fixture 13 may, for example, have a cylindrical structure that extends upward from pallet 10 through the annulus of support structure 12 and through the bore of any supported stator subassembly. The tubular sides of fixture 13 may, for example, be a circular array of spaced-apart slats or strips 13'. Adjacent slats 13' in the array may be separated by a spacing or passageway 13''. Passageways 13'' provide clearance for the operation of external workpiece-handling tools (such as collet clamps 24' FIG. 6). Slats 13' provide radial position references for poles 70 inserted in the seats in the inner casing tubes. Slats 13' may be designed to abut portions of pole shoes 72 along the length of poles 70. Abutting slats 13' resist tilt, sag, or other position shifts by the inserted poles 70, and thereby help preserve the geometrical configuration of the supported stator subassembly. An optional circular cap 13''' that crowns upright slats 13' may be used to structurally reinforce or stabilize fixture 13.

Fixture 13 may be releasably fastened to pallet 10 using conventional mechanical arrangements. FIG. 3 shows an exemplary fastening arrangement using spring-loaded ball positioner 14'. Positioner 14' is threaded in support structure 12 such that a spring-loaded fastening ball 14 is biased to center and releasably hold fixture 13 in support'structure 12.

It will be understood that the various dimensions of a specific fixture 13 and a support structure 12 may be designed for use with stator subassemblies of specific size or type. Fixture 13 and support structure 12 on pallet 10 may be suitably replaced or changed to correspond to the particular size or type of stator that is being manufactured.

Continuing with the description of the fabrication process of the multiple pole stator inner casing, reference is again made to FIGS. 4a, 4b, 5a, 5b and 6. In the fabrication process, bottom tube section 60b resting on support structure 12 of pallet 10 (FIGS. 2 and 3) may be loaded with exemplary pole pieces 70. FIG. 4a schematically depicts the insertion of pole piece 70 in the seats or receptacles in bottom tube section 60b. FIG. 4b shows inserted pole pieces 70 in upright orientations abutting slats 13'. Next, pallet 10 may be moved on belts 11 to another workstation, for example, where a top tube section 60a can be lowered over inserted pole pieces 70. As pallet 10 is moved, edge portions 12' and slats 13' preserve the upright orientation and the radial positions of inserted poles 70. With inserted pole pieces 70 so aligned, top tube section 60a may be readily lowered over them (70) and joined with bottom tube section 60b to form a single tube 60.

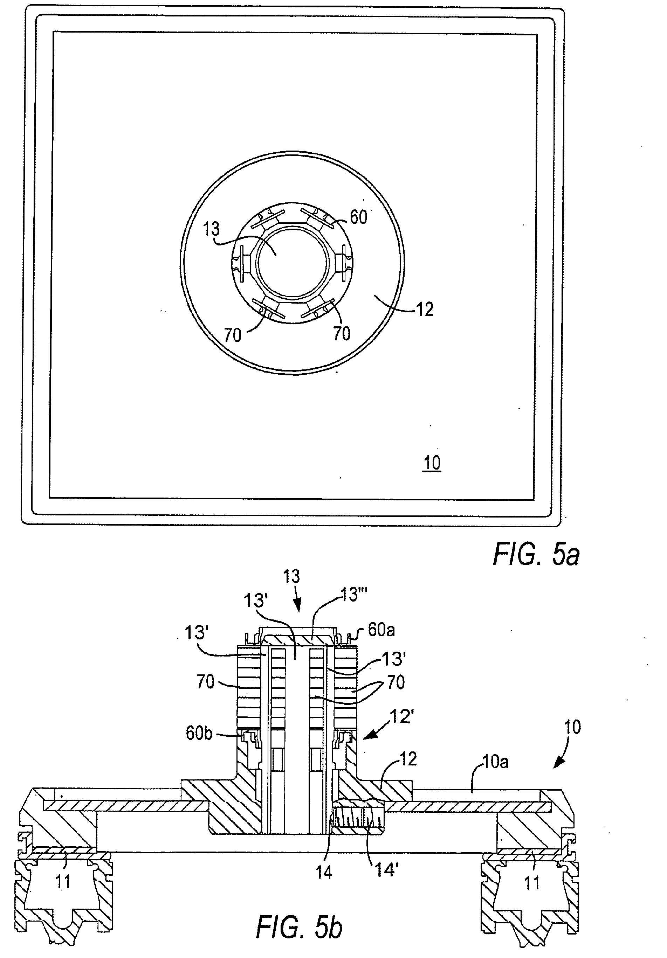

FIGS. 5a, 5b, and 6 show stator inner subassembly or casing 60 with the joined tube sections. FIG. 6 additionally shows a workpiece gripper or collet that has been introduced in the bore of stator inner casing 60. When biased by axial operation of plug 26', collet clamps 24' move through inter-pillar passageways 13'' of fixture 13 to contact the surfaces of poles 70. Collet clamps 24' are shown radially biased against pole pieces 70.

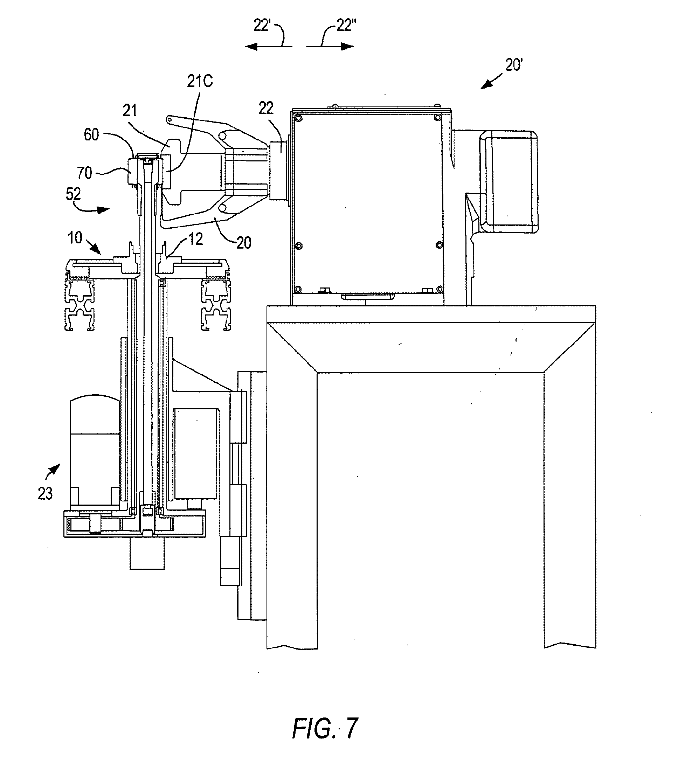

Multiple-pole stator inner casing 60 shown in FIGS. 5a and 5b may be further transported on pallet 10 to a winding station. At the winding station, wire coils may be wound in casing pockets 62 that encircle poles 70 (FIG. 6). A flyer-type winder may be used for the wire coil winding (e.g., winder 20' FIG. 7). The inventive transport systems include workpiece loading and unloading apparatus (e.g., apparatus 23). Apparatus 23 may be used to move transported stator inner casing 60 from pallet 10 to a raised work position in flyer-type winder 20'. Features of apparatus 23 and its operation in conjunction with winder 20' and pallet 10 are described herein, for example, with reference to FIGS. 6, 7, 8a, 8b, 9 and 10.

Winder 20' may have a winding head 52 for depositing a wire coil around any one of poles 70 of raised inner casing 60. Optionally winder 20' may include several winding heads for winding wire coils around several poles simultaneously (see e.g., Becherucci et al. EP 1020975). Exemplary winding head 52 includes a flyer 20 and winding guide 21 mounted on a shaft 22.

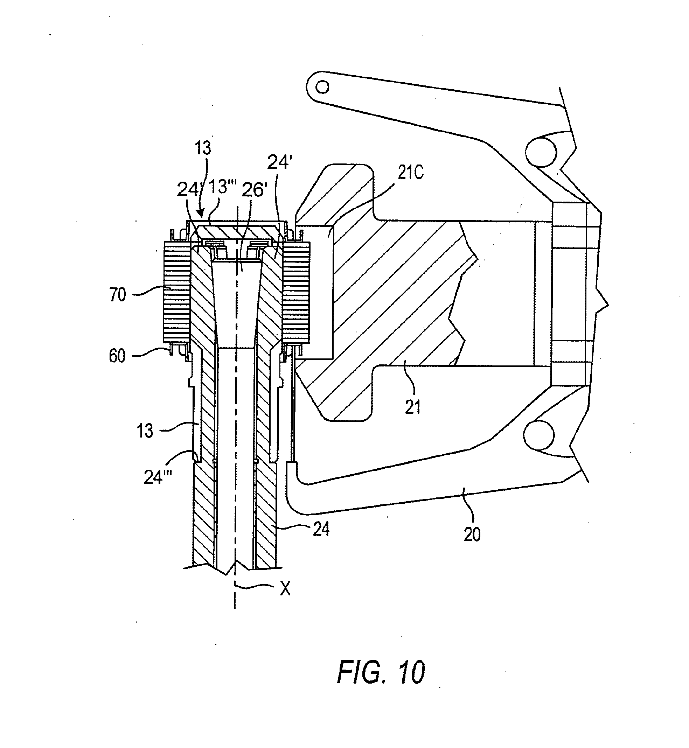

In operation, flyer 20 rotates on shaft 22 around one of poles 70 of raised casing 60 to deposit wire turns in pocket 62 adjoining the subject pole. During the operation, winding guide 21 is suitably positioned in alignment with subject pole 70 and flyer 20, to direct wire dispensed by flyer 20 into pocket 62. Shaft 22 also may be used to translate flyer 20 and winding guide 21 to and fro in directions 22' and 22'' to deposit wire at different depths in pocket 62. To facilitate this to and fro movement, winding guide 21 may have a suitable shape with hollow central portion or cutout abutting subject pole 70. The central cutout, for example, cutout 21c, permits unhindered movement of winding guide 21 in directions 22' and 22'' over the ends of pocket 62 adjoining subject pole 70 (FIG. 10). In the coil winding operations, shaft 22 translation may be suitably controlled to deposit wire turns in successive layers and obtain desirable stratification of the deposited wire coil.

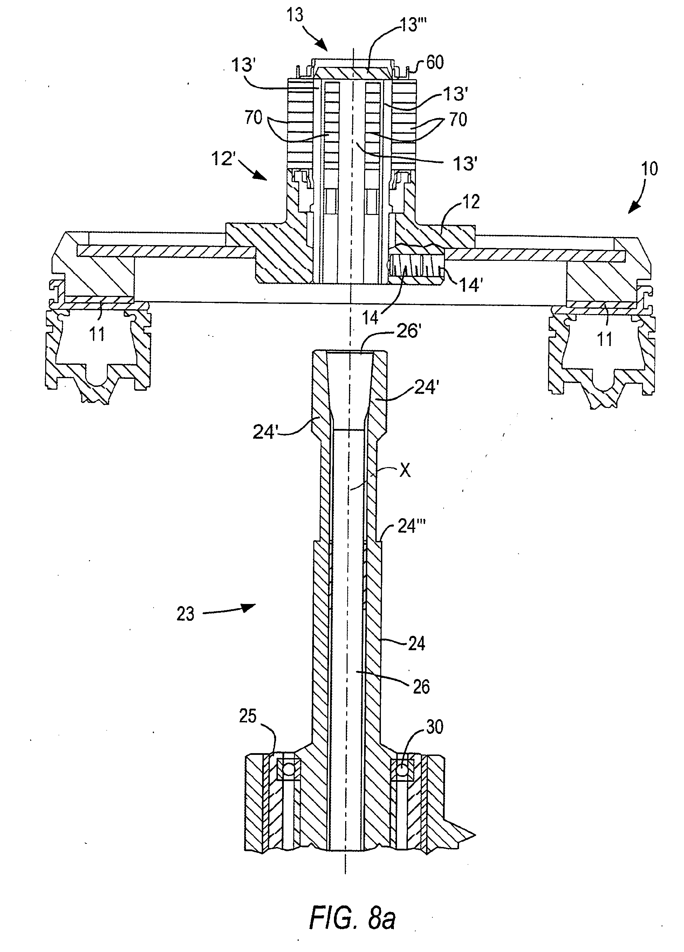

At the winding station, exemplary apparatus 23, which may be used for lifting or raising inner casing 60 to the work position in winder 20', is placed underneath pallet 10 (FIG. 8a). Apparatus 23 includes gripping mechanisms for holding poles 70 that are seated in casing 60 in fixed positions during the winding operations. Apparatus 23 also includes an indexer for aligning poles 70 with winding guide 21 and flyer 20. The indexer may be used, for example, to sequentially position poles 70 for wire coil deposition.

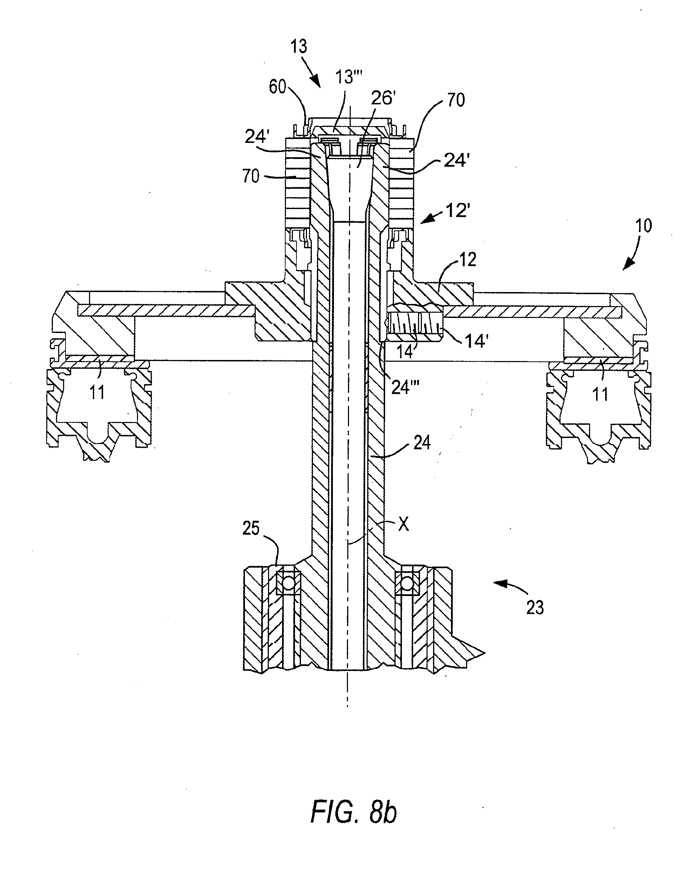

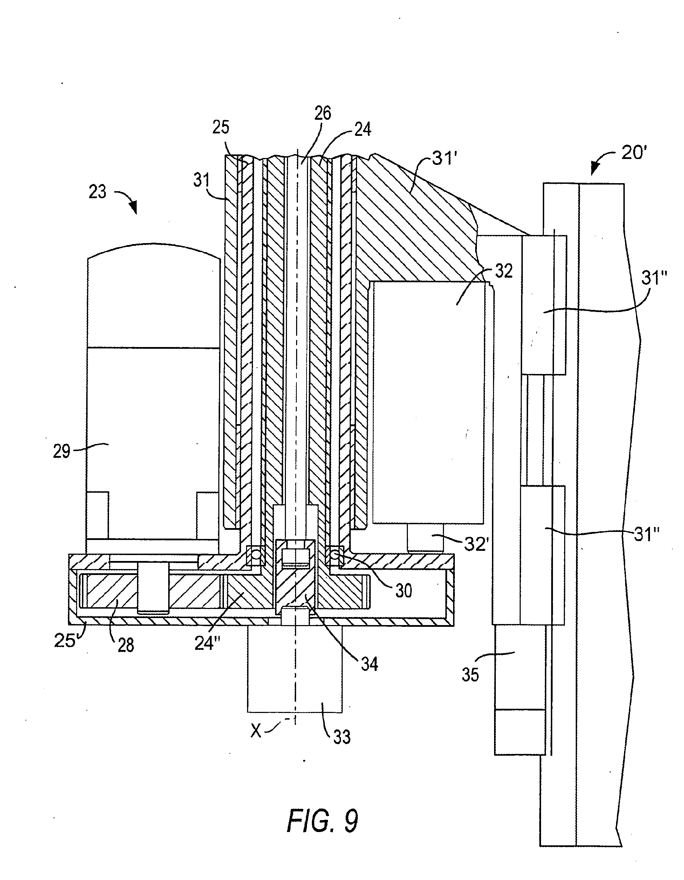

FIGS. 8a, 8b and 9 show several components of apparatus 23, namely support cylinder 24, frame tube 25, and central shaft 26. The three components have concentric cylindrical structures with central shaft 26 and frame tube 25 as the innermost and outermost components, respectively.

Support cylinder 24 has an expanding collet-like gripping structure at its upper end. The collet-like structure may be designed to grip and firmly hold multiple-pole stator inner casing 60. Annularly spaced finger-like clamp portions 24', which extend upwardly from tubular portions of support cylinder 24, form the collet-like structure. The number of clamps 24' may correspond to the number of poles 70 present in casing 60. Each clamp 24' may be intended to engage a corresponding one of poles 70. Further, the collet-like gripping structure may be designed to operate through the common bores of inner casing 60 and fixture 13. Accordingly, the diameter of the collet-like structures (unbiased) may be less than the inner diameter of fixture 13. Additionally, the widths of clamps 24' and the inter-clamp spacings may be designed so that clamps 24' can freely move without interference through spacings 13'' between slats 13' of fixture 13 (FIG. 6). In operation, a frusto-conical shape plug 26' on top of central shaft 26 may be used to engage clamps 24' to bias them (24') against poles 70 through spacings 13''.

Lengths of support cylinder 24 below the collet-like structures also may have a diameter, which is smaller than the inner diameter of fixture 13. In which case, the smaller-diameter lengths of support cylinder 24 also can pass through the bore of fixture 13. Alternatively, lengths of support cylinder 24 below the length necessary to insert the collet-like structures up to the top of casing 60 may have a diameter that is larger than the inner diameter of fixture 13. Support cylinder 24 shown herein, for example, in FIGS. 7, 8a, 8b and 10, corresponds to the latter alternative. Lengths of exemplary support cylinder 24 below ledge surface 24''' have a diameter, which is small enough for passage into support structure 12 bore, but which is sufficiently large to disallow passage through (inner) fixture 13 bore.

Apparatus 23 may be suitably configured so that the three concentric cylindrical components (support cylinder 24, frame tube 25 and central shaft 26) can, individually or in various combinations, move vertically. Support cylinder 24 also may rotate. Conventional motor drive or actuator arrangements may be used to move the various components. FIG. 9 shows an exemplary arrangement. In the exemplary arrangement, frame tube 25 is slidably seated in a vertical external tube 31. (Support cylinder 24 and, central shaft 26 are seated in frame tube 25.) External tube 31 is mechanically connected by sheet 31' to vertical guides 31'', which, for example, are mounted on the frame of winder 20'. A linear actuator 35 drives guides 31'' (and attached external tube 31) up or down. Accordingly, support frame tube 25, which rests in external tube 31, moves up and down. Further, a horizontal enclosure 25' is attached to the bottom end of frame tube 25. A linear actuator 32 is mounted on sheet 31' with its vertically movable shaft attached to enclosure 25'. By this attachment, frame tube 25 may move vertically relative to external cylinder 31 in response to actuator 32 actions. Also another linear actuator 33 is mounted on enclosure 25'. Actuator 33 is coupled to the bottom of central shaft 26 through coupler 34. By this coupling, actuator 33 may push or pull central shaft 26 up or down in support cylinder 24.

Further, bearings 30 are mounted in frame 25 to enable smooth rotation of support cylinder 24 around axis X. A motor 29 is mounted on enclosure 25' for controlled rotation of support cylinder 24. Motor 29 may impart rotary motion to support cylinder 24 through the combination of meshed gears 28 and 24'' that are respectively mounted on a shaft of motor 29 and the bottom of support cylinder 24. Gears 28 and 24'' are enclosed in enclosure 25'.

In the operation using apparatus 23 to raise stator inner casing 60 from pallet 10 to the work position in winder 20', a preliminary procedure involves firmly gripping casing 60 with the collet-like structure atop support cylinder 24. In preparation of this procedure, with support cylinder 24 below pallet 10 (FIG. 8a), shaft 26 is pushed up through cylinder 24 by actuator 33 so that clamps 24' are in an unbiased state. Also, as needed, clamps 24' may be radially aligned with spacings 13'' by turning support cylinder 24 using motor 29. Next, linear actuator 32 raises frame tube 25 (with concentric structures 24 and 26) to insert unbiased clamps 24' into the common bore of inner casing 60 and fixture 13 for engagement with pole shoes 72. As the lengths of clamps 24' are fully extended into the bore of casing 60 along its vertical axis, ledge surface 24''' of support cylinder 24 may come in contact with the bottom end of fixture 13 (FIG. 8b).

With clamps 24' in position adjacent to spacing 13'' in the bore of casing 60, actuator 33 retracts or pulls shaft 26 downward so that frusto-conical plug 26' engages and biases clamps 24'. Biased clamps 24' expand radially outward and deflect through spacings 13'' to contact pole shoe 72 surfaces. By design expanded or deflected clamps 24' radially press against pole shoes 72, and thereby firmly grip inner casing 60.

In the operation to raise casing 60, after the preliminary procedure for firmly gripping casing 60 with clamps 24' is completed, actuator 35 drives guides 31'' upward. Consequently, frame tube 25 (which rests in external tube 31) and concentric inner structures 24 and 26 all move upward. Their upward movement lifts gripped casing 60 from pallet 10. In the process, ledge surface 24''' of support cylinder 24 pushes fixture 13 free of spring-loaded fastening ball 14, and thus detaches fixture 13 from support structure 12. Detached fixture 13 may rest on ledge surface 24''' (FIG. 10). Then further upward movement of guides 31'' driven by actuator 35 raises gripped inner casing 60 to a desired work position in vertical alignment with flyer 20.

Using another embodiment of apparatus 23, stator inner casing 60 may be raised to the work position without having to detach and carry along fixture 13. In this embodiment lengths of support cylinder 24'' below the collet-like structures have a small diameter which permits passage into fixture 13 bore (not shown). After inner casing 60 has been firmly gripped by clamps 24' (FIG. 8b), support cylinder 24 is moved upward through suitably modified fixture 13 to raise inner casing 60 above fixture 13. For this to happen fixture 13 may be modified to have a bore that is open at its top end. The modification may be obtained by using fixture 13 without optional cap 13''' or removing cap 13''' prior to lifting inner casing 60 from pallet 10. In either case, inner casing 60 may be raised to the work position with biased clamps 24' sliding up through fixture spacings 13''.

Stator inner casing 60, which has been raised using either embodiment of apparatus 23, further may be rotationally indexed around axis X. Motor 29 may be used to turn support cylinder 24 to index raised inner casing 60. The indexing may, for example, sequentially present poles 70 one by one for wire coil winding by flyer 20.

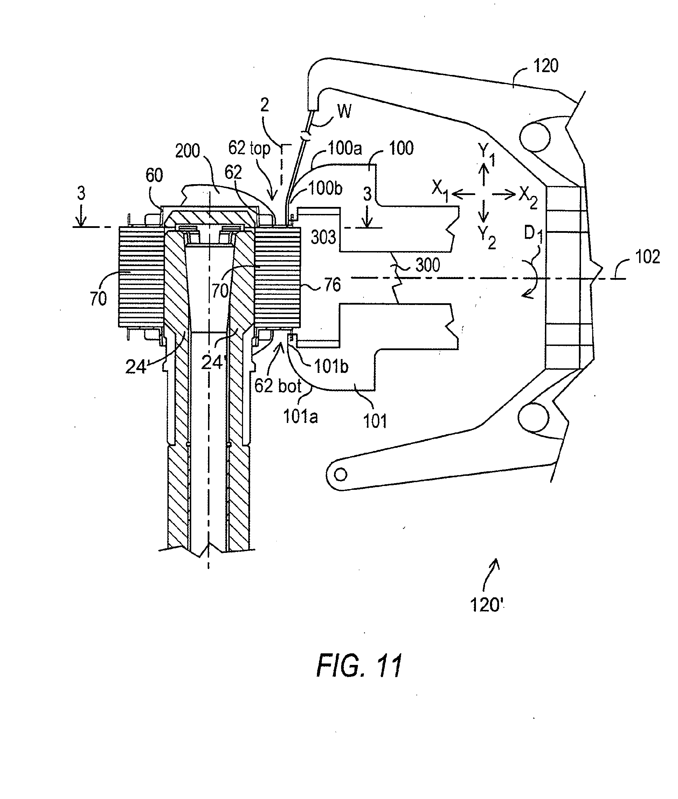

For specific wire coil winding applications, specific winders (other than winder 20' described above) may be used. A winder 120', which has additional mechanical features for controlling the wire coil deposition in the pockets of raised stator inner casing 60, is described herein with reference to FIGS. 11, 12, 13 and 14. Winder 120' includes flyer arm 120 and a pair of wire guides, namely guides 100 and 101. Wire guides 100 and 101 are shaped to include sloped wire-running portions or surfaces (e.g. 100a and 101a, respectively) that smoothly extend into wire drop surfaces (100b and 101b, respectively). Wire drop surfaces 100b and 101b may be vertical or almost vertical. Guides 100 and 101, and flyer arm 120, can translate in directions X1 and X2, and also in directions Y1 and Y2. Winder 120' may also include optional pairs of supplementary wire guides namely guides 200 and 201, and 300 and 301. Other conventional parts or portions of winder 120' may, for example, be similar to those of winder 20'. For clarity these conventional portions (e.g., frame, shafts, and drive mechanisms) are omitted from the FIGS.

Winder 120' may advantageously be used for depositing layered and tightly wound wire coils in pocket 62 adjoining subject pole piece 70 that has been indexed or presented for wire coil winding. FIG. 11 shows a disposition of two guides 100 and 101, and flyer arm 120 relative to pocket 62. Guides 100 and 101 are respectively aligned with top end 62top and bottom end 62bot of pocket 62.

In the operation of winder 120', flyer arm 120 rotates around axis 102 in direction D1, and dispenses tensioned wire W into coil pocket 62. A length of tensioned wire W stretches from flyer arm 120 to that portion of a wire coil turn, which is already deposited or formed in coil pocket 62. Guide portions or surfaces 100a and 101a, cooperatively alternate in intercepting wire W as flyer arm 120 rotates around axis 102. The intercepted wire W runs down portions or surfaces 100a (or 101a) and is dropped along terminal drop surfaces 100b (or 101b) into pocket 62. The dropped wire is deposited in pocket 62 along the foot of the drop surfaces. Thus, wire turns may be deposited at specific locations in pocket 62 by aligning drop surfaces 100b and 101b with those specific locations. This operational capability of winder 120' may be used to control the deposition of wire in pocket 62 and, for example, to wind wire coils in successive layers. The controlled deposition of wire coils in pocket 62 in successive layers may be advantageous in obtaining tightly wound coils and in achieving desirable high wire turn occupancy.

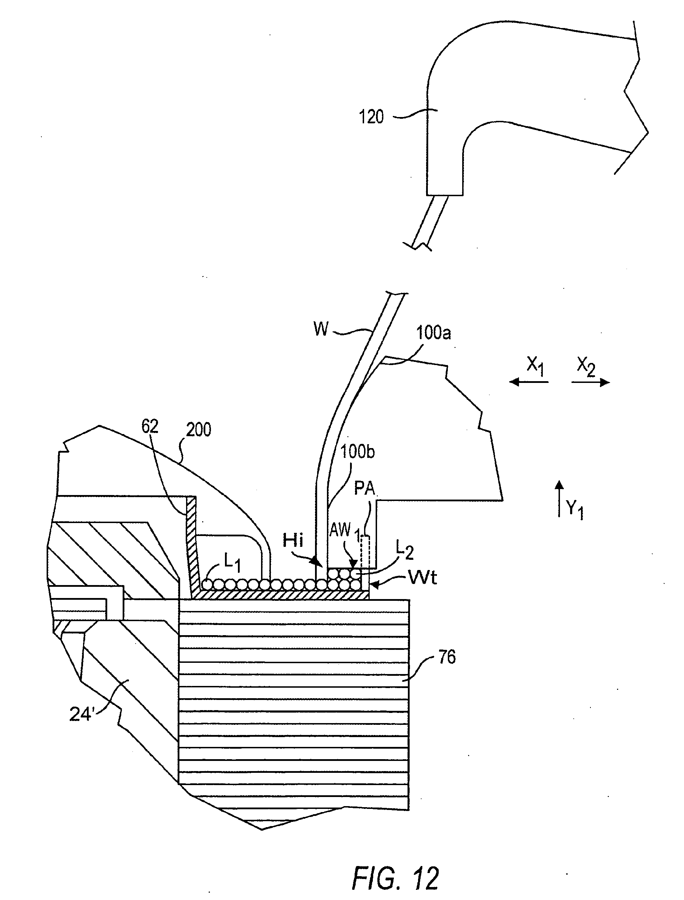

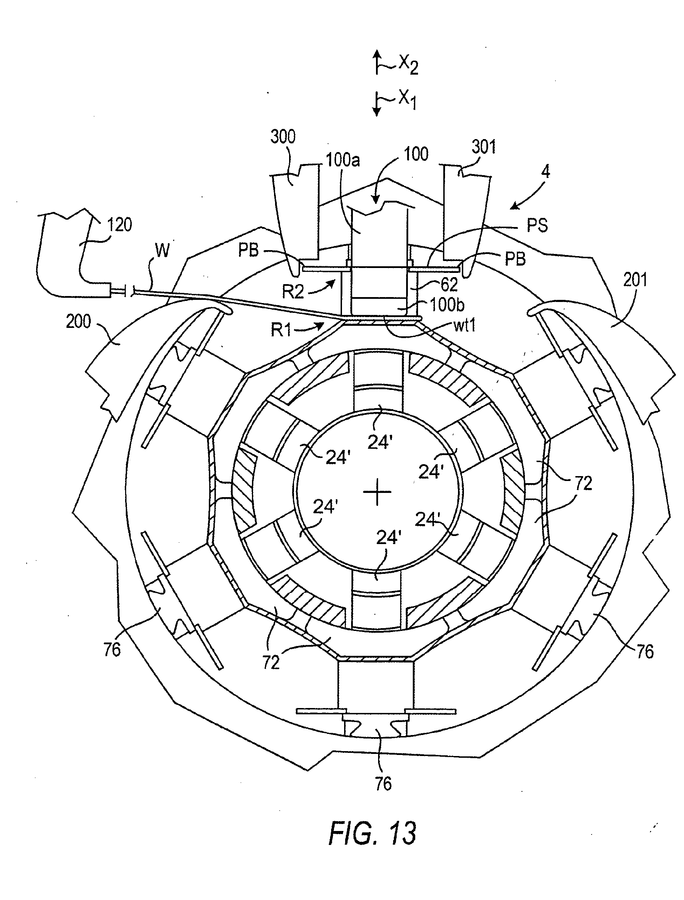

FIGS. 12, 13, and 14 show details of the formation of a layered wire coil in pocket 62. In particular, FIG. 13 depicts the winding state at the start of the deposition of the layered wire coil. The deposition of the first wire coil layer starts with a first wire turn (wt1) deposited at the far or interior end of pocket 62. FIG. 12 depicts a later winding state in which the first layer (L1) and a partial second layer (L2) of the layered wire coil have been formed by wire turns wt. For convenient description, reference is first made to the later winding state shown in FIG. 12, and then to the earlier winding state shown in Fig. 13.

The wire turns shown in FIG. 12 may have been wound in pocket 62 by previous excursions of flyer 120 around axis 102. Drop position Hi is located in pocket 62 at the foot of surface 100b (i.e., at a location below but slightly to the left of the vertical drop of surface 100b). Drop position Hi is adjacent to the most recently deposited wire turn in partial layer L2. In FIG. 12, wire W dispensed by flyer 120 is shown as being pulled or dropped over surface 100b in to position Hi at the foot of portion 100b to form the next turn in second layer L2 of the wire coil.

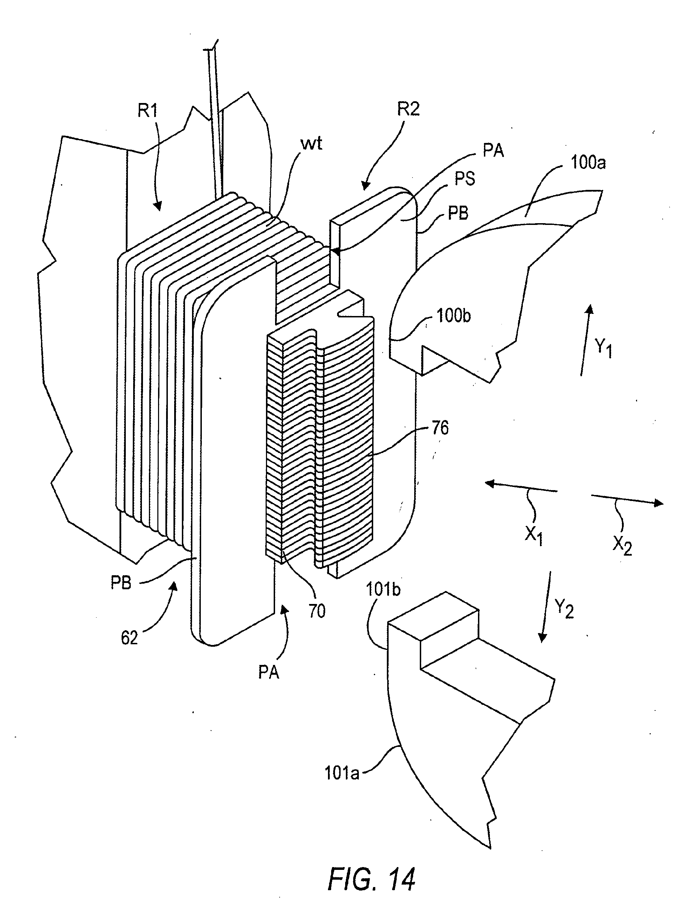

As the layered wire coil deposition process progresses, guides 100 and 101 (and flyer arm 120) are controllably moved laterally along directions X1 (or X2) to advance their foot positions (e.g., drop position Hi) to place the impending wire turn adjacent to the most recently deposited wire turn in a layer. For orderly buildup of the wire layer, the lateral guide and flyer movements, which may be continuous or intermittent, are synchronized with the rotational position of flyer 120 around axis 102. Further, during the wire layer deposition, surfaces 100b and 101b may be positioned sufficiently close to the top surface of the partially deposited wire layer (e.g., layer L2) to preclude the possibility of dropped wire slipping underneath surfaces 100b and 101b and over previously deposited turns (e.g., in area AW1). It will be understood that if necessary or advantageous, outer or front sidewalls PS of pocket 62 may have suitable cutouts PA to provide clear passages for the lateral movement of guides 100 and 101 while keeping guides surfaces 100b and 101b close to the top surfaces of the developing wire coil (FIG. 14).

For a well-stratified multilayer wire coil, the first turn of an upper layer (e.g., layer L2) may be placed vertically above the last or final wire turn of the preceding completed layer (e.g., layer L1). To achieve this, after the final wire turn in the completed layer is deposited, the separation of guides 100 and 101 in directions Y1 and Y2 perpendicular to the plane of the completed layer may be increased. The increase may be calibrated to raise the bottom ends of guides 100b and 101b to the top of the new layer so that their respective drop positions (e.g., position Hi) are now on top of the final wire turn in a completed layer. Then the first turn of the new upper layer may be placed in the raised drop positions above the final turn of the completed layer. Subsequent wire turns in the new layer may deposited while moving the guide surfaces 100b and 101b laterally in directions X1 (or X2), as described previously.

FIG. 13 shows the positions of the drop surfaces 100b and 101b at the initial stages of the formation of the first wire coil layer. In preparation for the wire coil winding, flyer 120, and guides 100 and 101 may be moved in direction X1 toward the center of inner casing 60 to positions over the innermost areas (R1) adjacent to the back wall of pocket 62. Drop surfaces 100b and 101b may be placed close to the back wall so that their respective drop positions (e.g., position Hi) are adjacent to the back-wall. Then a first wire turn wt1 may be dropped or deposited adjacent to the back wall of pocket 62 by action of flyer 120 in the manner previously described. After first wire turn wt1 is deposited, the first wire coil layer may be completely wound by placing successively adjacent wire turns in pocket 62 by moving flyer arm 120 and guides 100b and 101b laterally (in direction X2) as described previously.

In some winding applications, depending, for example, on specific stator geometry and dimensions or desired wire coil specifications, additional or supplemental wire guides also may be used. The supplemental guides may be used to direct or guide tensioned wire W in advantageous orientations to pocket 62. The supplemental guides may, for example, be used to overcome geometrical obstructions in the path of wire W. FIG. 13 shows, for example, pockets adjacent to subject pole 70 that interfere with a straight-line path of wire W extending from flyer arm 120 to area R1 of pocket 62 adjoining subject pole 70. The interfering adjacent pocket structures are likely to snag or catch wire W dispensed by flyer 120. To overcome this interference, supplementary guides 200 and 201 may be positioned at the adjacent pole or pocket structures.

In operation, supplementary guides 200 and 201 intercept wire W dispensed by flyer 120. Suitably shaped running surfaces on the guides 200 and 201 redirect the intercepted wire toward pocket 62. The intercepted wire may be redirected at suitable angles to the areas of pocket 62, where guide portions 100b and 101b are located to deposit wire turns. This use of supplementary guides 200 and 201 prevents wire snagging or catching by the interfering adjacent pole structures and allows tensioned wire W to be pulled around the innermost areas (R1) of pocket 62 at desirable pull angles by flyer 120.

Similarly, supplementary guides 300 and 301 may be used to guide or direct wire W to over come geometrical obstructions near the outermost areas (R2) of pocket 62. FIG. 13 shows, for example, supplementary guides 300 and 301 positioned at borders PB of the outer or front structures of pocket 62. Guides 300 and 301 prevent the front structures of pocket 62 from snagging or catching dispensed wire W. Also, suitably shaped running surfaces on the guides 300 and 301 allow redirection of wire W toward the outermost areas (R2) of pocket 62.

After the winding operations (using, e.g., winder 20' or 120') are complete, stator inner casing 60 may be lowered to rest on support structure 12 on pallet 10. The lowering process may be conducted by suitable operation of apparatus 23. For brevity the lowering process is not described herein in any detail. However, it will be understood that the lowering process may, for example, generally proceed by suitably reversing some or all of the steps in the raising process described previously with reference to FIGS. 7, 8a, 8b, and 9.

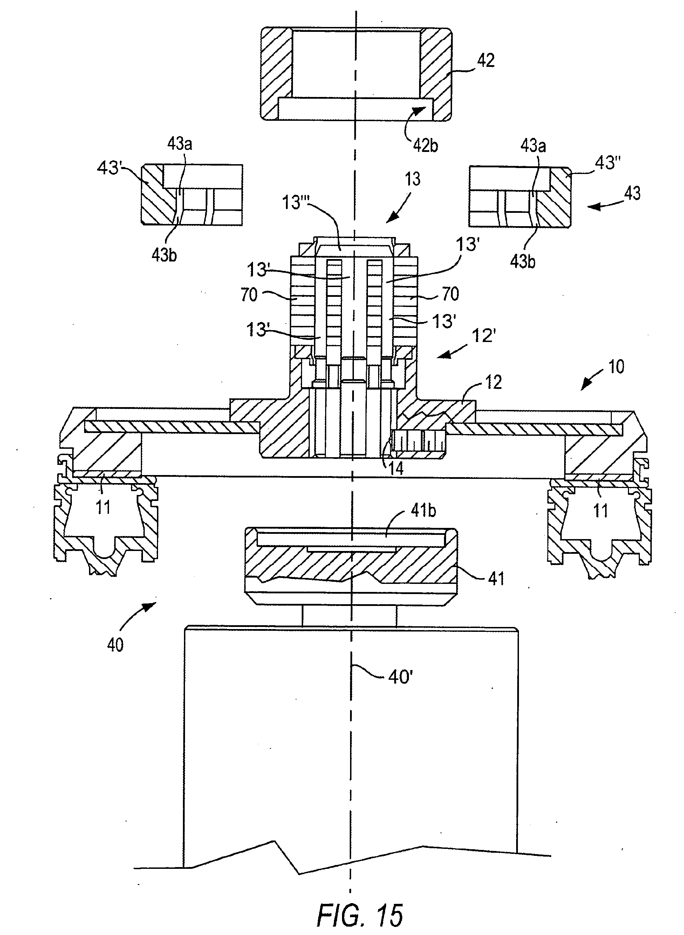

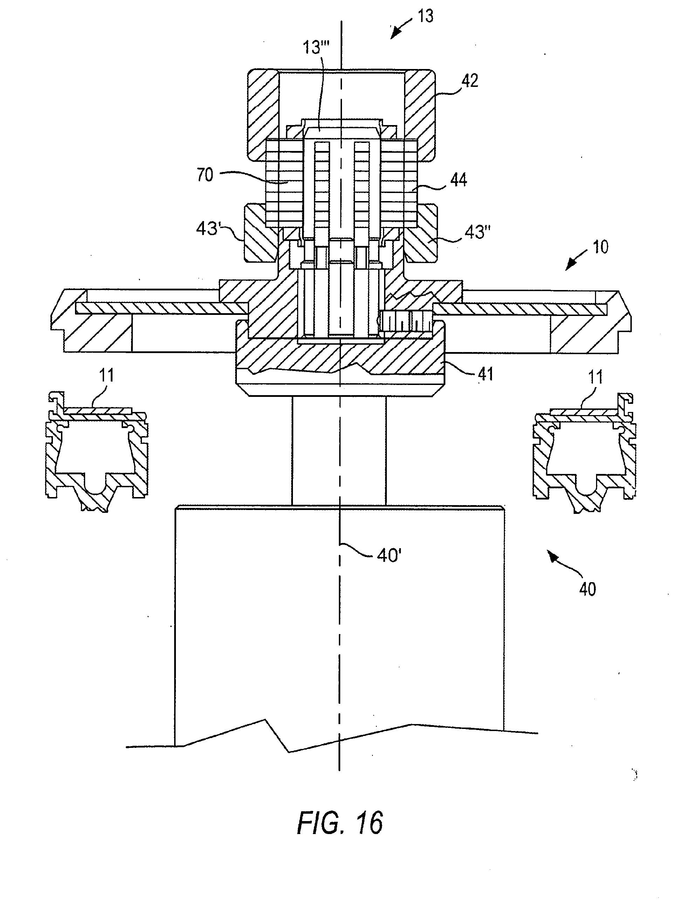

Lowered stator inner casing or subassembly 60 with wire coils wound in pockets 62 around poles 70 may be transported on pallet 10 to a workstation for fitting or locking inner casing 60 in a matching outer casing or support ring 44. Matching outer casing 44 may have complementary dovetail slots along its inner surface that match dovetail pins 76 extending radially from inner casing 60. A press unit 40 may be used for press-fitting inner and outer casings 60 and 44 together. Features of press unit 40 and its operation in conjunction with pallet 10 are described herein with reference to FIGS. 15, 16, and 17.

With reference to FIG. 15, press unit 40 includes a movable pressing block 41 underneath a movable backing or counter block 42. The two blocks are aligned facing each other along axis 40'. The two blocks may be used to press inner and outer casings 60 and 44 that are similarly aligned along axis 40' together. Press block 41 may have a suitable shape conforming to the shape of portions of the lower surface of pallet 10. For example, press block 41 may have a cup-like surface 41b conforming to the tub-like bottom surface of support structure 12 that extends below plate 10a. The conformal contact surface 41b may be designed to ensure that during the operation of press 40, block 41 presses or pushes casing 60 along axis 40' with even or uniform pressure over the cross-section of casing 60. Similarly, backing block 42 may have suitable shape for uniformly contacting outer casing or support ring 44. For example, backing block 42 may have an annular seat or surface 42b conforming to the top surfaces of support ring 44. The conformal contact surface 42b may be designed to ensure that during the operation of press 40, block 42 presses against casing 44 along axis 40' with even or uniform pressure over the cross-section of casing 44.

Press unit 40 also includes centering assembly 43. Assembly 43 may have an annular or ring-like structure, which may have a tapered bore. Assembly 43 may be made up of matching half portions, namely movable members 43' and 43''. Movable members 43' and 43" have open positions away from axis 40'. Members 43' and 43'' may close around axis 40', for example, in the manner of a clamshell, or by other suitable motion. In their closed or ring-like configuration members 43' and 43'' may support upright outer casing 44 in a cylindrical seat centered on axis 40'. Further backing block 42 may be lowered on outer casing 44 seated on closed members 43' and 43"to firmly hold outer casing 44 in a fixed upright position. Conventional drive means (not shown) may be used to move the various block or members in press unit 40.

Members 43' and 43'' include dovetail guide ways, channels, or grooves along their inner cylindrical surfaces (in closed position), which lead to the dovetail slots in uprightly seated outer casing 44. The dovetail channels may be designed to suitably align and direct all dovetail pins 76 of casing 60 into corresponding or complementary dovetail slots of outer casing 44 seated on members 43' and 43''. For example, upper channel portions 43a may have dovetail cross sectional dimensions that are the same or identical to the dimensions of the dovetail slots in outer casing 44. Further, portions 43a may have a vertical orientation with channel sides aligned with the sides of corresponding dovetail slots in outer casing 44. Lower channel portions 43b may have dovetail cross sectional dimensions that are larger or wider at the bottom opening, but which taper or grade down to the dimensions of upper portions 43a over the length of lower portions 43b. Additionally, lower portions 43b may start at a greater radial distance from axis 40' than vertical upper portions 43a and then slant or curve into the latter.

In the operation using press unit 40 to fit and lock inner casing 60 in matching outer casing 44, pallet 10 carrying the former is brought to rest over block 41. Pallet 10 may be aligned so that the common central axis of support structure 12 and inner casing 60 coincides with axis 40' (FIG. 15). Matching outer casing 44 may be pre-positioned between block 42 and closed members 43' and 43'', with its (44) dovetail slots aligned with corresponding channels 43a (not shown). Next, press block 41 may be raised to contact the underneath of plate 10a. Further upward movement of press block 41 lifts pallet 10 up from belts 11. The tub-like bottom portions of support structure 12 of lifted plate 10a may be seated or rest in matching cup-like surfaces 41b of block 41. The conformity between the tub-like bottom portions and cup-like surfaces 41b may allow block 41 to support lifted plate 10a over a large area and keep the latter in a stable horizontal orientation with inner casing 60 aligned along axis 40'.

As the upward movement of block 41 continues, channels 43b receive dovetail pins 76 of inner casing 60. Received dovetail pins 76 are pushed up through channels 43b and 43a. In the process channels 43b and 43a align received dovetail pins 76 and direct them into the corresponding dovetail slots of outer casing 44. Aligned dovetail pins 76 slide into the corresponding outer casing dovetail slots as inner casing 60 is pushed up and pressed into outer casing 44 (FIG. 12) by upward movement of block 41. The slant or curved orientation of channels 43b leading to vertical channels 43a may allow for some radial compression of pole pins 76 and inner casing 60 as the latter are pushed up. This radial compression may advantageously allow tight-fitting inner casing 60 to slide into outer casing 44 smoothly.

In an alternate fitting procedure using pallet 10 in conjunction with suitably modified press 40, outer casing 44 may be pushed down over inner casing 60. Press 40 may be suitably modified, for example, by enabling additional downward movement of members 43' and 43''. In this alternative procedure, first, block 41 may be raised to firmly support pallet 10 carrying inner casing 60. Matching outer casing 44 may be seated upright, sandwiched between block 42 and closed members 43' and 43''. Then the entire upper assembly (42, 44, 43' and 43'') may be lowered to push or press outer casing 44 over inner casing 60. In this process, channels 43a and 43b may function in a manner similar to that described above to gather and direct dovetail pins 76 into corresponding dovetail slots in outer casing 44.

In either fitting procedure, after inner casing 60 is assembled or fitted in outer casing 44, members 43' and 43'' may be disengaged and returned to their open positions. Then block 41 may be activated to disengage or lower pallet 10 carrying the assembled stator casing to a rest position on belts 11.

One skilled in the art will appreciate that the present invention can be practiced by other than the described embodiments, which are presented for purposes of illustration and not of limitation. It will be understood that terms like "forward" and "backward", "front" and "rear", and other directional or orientational terms are used herein only for convenience, and that no fixed or absolute orientations are intended by the use of these terms.

## Claims

1. A dynamo-machine component manufacturing system for processing a workpiece, wherein said workpiece has a multipart configuration of pole pieces installed in seats in a casing, said system comprising:
a pallet having disposed thereon structures for substantially preserving the geometry of said multipart configuration, wherein said structures include a first structure for supporting said casing in a predetermined orientation and a second structure for referencing the radial positions of said installed pole pieces; and
a mechanism for raising said multipart configuration to a work-position for processing in a tool.

2. The system of claim 1 wherein said pallet base includes an aperture through which said mechanism for raising said multipart configuration to said work-position operates.

3. The system of claim 1 wherein said mechanism comprises a collet for gripping said workpiece, and wherein said collet has a plurality of clamps for contacting said pole pieces installed in said seats.

4. The system of claim 1 wherein said first support structure comprises slats that are spaced apart to provide clearance for wire coils wound around said seats with installed pole pieces.

5. The system of claim 1 wherein said multipart configuration is a stator subassembly, wherein said second structure comprises a fixture configured to fit a bore of said stator subassembly, and wherein said fixture includes passages for receiving the clamp portions of an expanding collet introduced in said stator bore.

6. The system of claim 1 wherein said second structure is a detachable structure that can be detached by action of said mechanism.

7. The system of claim 1 wherein said second structure has an open bore and wherein said mechanism operates through said open bore to raise said workpiece above said second structure.

8. The system of claim 1 wherein said tool comprises a flyer-winder for winding wire coils in pockets around said seats with said installed pole pieces.

9. The system of claim 8 wherein said flyer-winder further comprises a wire guide having a wire-running surface that extends to a wire-drop surface for depositing wire turns in a subject pocket.

10. The system of claim 9 wherein said wire-drop surface can be translated in directions that are substantially parallel and in directions that are substantially perpendicular to a surface of said subject pocket.

11. The system of claim 10 wherein said subject pocket has a frontside opening, and wherein said wire-drop surface is translated through said frontside opening proximate to a surface of the wire coil being wound in said subject pocket.

12. The system of claim 1 wherein said multipart configuration is a stator inner subassembly, and wherein said tool comprises a press for fitting said stator inner subassembly in an outer casing.

13. The system of claim 12 wherein said mechanism comprises a block for pressing said stator inner subassembly into said outer casing, wherein said block has a contact surface that conforms to a bottom surface of said pallet.

14. The system of claim 12 wherein said press comprises a member for aligning said stator inner subassembly to said outer casing.

15. The system of claim 14 wherein said member for aligning said stator inner subassembly to said outer casing comprises a structure having a tapered bore.

16. The system of claim 14 wherein said stator inner subassembly comprises locking structures and said outer casing comprises complementary locking structures, and wherein said member comprises channels to receive and align said locking structures with said complementary locking structures.

17. The system of claim 14 wherein said member comprises an annular seat for seating said outer casing, and wherein said member is a movable for lowering said seated outer casing around said stator inner subassembly that is seated on said pallet.

18. A method for fabricating a dynamo-machine component from multiple parts that include pole pieces installed in seats in a casing, the method comprising:
disposing structures on a pallet to provide rigidity to a subassembly of parts;
using the pallet to support the subassembly of parts in a predetermined orientation; and
using a mechanism to raise the subassembly of parts to a work-position for processing in a tool.

19. A stator made by the method of claim 18, comprising:
an inner casing having a plurality of seats for receiving pole pieces, wherein the casing includes pockets for receiving wire coils encircling the seats, and wherein the pockets have openings in their radially outward sides for receiving wire coil deposition guides;
a plurality of pole pieces installed in the seats;
a plurality of wire coils deposited in the pockets; and
an outer casing fitted around the inner casing using complementary locking structures disposed on the two casings.

20. The method of claim 18 wherein using a pallet comprises using a pallet with an aperture through which the mechanism to raise the subassembly of parts operates.

21. The method of claim 18 wherein using a pallet comprises using a pallet that has disposed thereon slats to support the subassembly of parts in the predetermined orientation, wherein the slats are spaced apart to provide clearance for wire coils wound around the seats with installed pole pieces.

22. The method of claim 18 wherein using a mechanism comprises using a collet for gripping the subassembly of parts, wherein the collet has a plurality of clamps for contacting the pole pieces installed in the seats in the casing.

23. The method of claim 18 wherein disposing structures on the pallet to provide rigidity to the subassembly of parts comprises disposing a detachable structure that can be detached by action of the mechanism to raise the subassembly of parts

24. The method of claim 18 wherein disposing structures on the pallet to provide rigidity to subassembly of parts comprises disposing a fixture for referencing the radial positions of the pole pieces installed in the seats in the casing.

25. The method of claim 24 wherein disposing a fixture comprises disposing a fixture having an open bore.

26. The method of claim 24 wherein disposing a fixture comprises disposing the fixture in a bore of the subassembly of parts.

27. The method of claim 26 wherein the fixture comprises passages for receiving the clamp portions of an expanding collet introduced in the bore.

28. The method of claim 18 wherein processing by a tool comprises winding a wire coil around a seat in the casing having an installed pole piece.

29. The method of claim 28 wherein winding a wire coil around a seat comprises using a wire guide with a drop surface for depositing a wire turn in the wire coil.

30. The method of claim 29 wherein using a wire guide with a drop surface comprises translating the drop surface along a surface of the wire coil to deposit adjacent turns in a layer of the wire coil.

31. The method of claim 30 wherein translating the drop surface along a surface of the wire coil comprises translating the wire guide through an opening in a front portion of the casing.

32. The method of claim 29 wherein using a wire guide with a drop surface comprises translating the drop surface perpendicular to a surface of the wire coil to deposit a wire turn above another wire turn in the wire coil

33. The method of claim 18 wherein using a mechanism to raise a subassembly of parts comprises using a block having a contact surface that conforms to a bottom surface of the pallet.

34. The method of claim 18 wherein processing by a tool comprises fitting the subassembly of parts in an outer casing.

35. The method of claim 34 wherein fitting the subassembly of parts in an outer casing comprises using a member to align the subassembly of parts with the outer casing.

36. The method of claim 35 wherein using a member to align the subassembly of parts with the outer casing comprises using a structure having a tapered bore.

37. The method of claim 35 wherein the subassembly of parts comprises locking structures and the outer casing comprises complementary locking structures, and wherein using a member to align the subassembly of parts with the outer casing comprises using an array of channels to receive and align the locking structures with the complementary locking structures.

38. The method of claim 35 wherein using a member to align the subassembly of parts with the outer casing comprises seating the outer casing on the member, and lowering the seated outer casing around the subassembly of parts that is seated on the pallet

39. A stator, comprising:
an inner casing having a plurality of seats for receiving pole pieces, wherein the inner casing includes pockets for receiving wire coils encircling the seats, and wherein the pockets have openings in their radially outward sidewalls for receiving wire coil deposition guides;
a plurality of pole pieces installed in the seats;
a plurality of wire coils deposited in the pockets, wherein said wire coils comprise wire turns deposited using a wire guide translated through the openings in the pocket sidewalls; and
an outer casing fitted around the inner casing using complementary locking structures disposed on the two casings.

40. A pallet for supporting a dynamo-machine workpiece in a predetermined orientation, the pallet comprising a cylindrical fixture disposed substantially concentrically with the dynamo-machine workpiece so that the cylindrical fixture maintains a plurality of portions of the workpiece in respective radial positions.

41. The pallet defined in claim 40 further comprising a body portion for supporting an axial end portion of the dynamo-machine workpiece.

42. The pallet defined in claim 40 wherein the cylindrical fixture comprises a plurality of members disposed in an annular array in which the members are annularly spaced from one another.

43. The pallet defined in claim 42 wherein at least one of the members is disposed radially adjacent each of the portions of the dynamo-machine workpiece.

44. The pallet defined in claim 40 wherein the cylindrical fixture is selectively removable from the pallet.

45. The pallet defined in claim 40 further comprising an aperture for allowing additional apparatus to be selectively inserted through the aperture into the bore of the cylindrical fixture.

46. The pallet defined in claim 40 that is adapted for allowing additional apparatus to selectively engage the plurality of portions of the dynamo-machine workpiece that are maintained in respective radial positions by the cylindrical fixture.

47. The pallet defined in claim 46 wherein the additional apparatus is adapted to selectively move the dynamo-machine workpiece relative to at least a portion of the pallet.

48. The pallet defined in claim 46 wherein the additional apparatus is further adapted to remove the dynamo-machine workpiece and the cylindrical fixture from a further body portion of the pallet.
